# EUROPEAN PATENT APPLICATION

(11) **EP 2 249 596 A1**
(43) Date of publication of application: **10.11.2010**
(21) Application number: 09714768.0
(22) Date of filing: 27.02.2009
(51) Int. Cl.: H04W 16/30, H04W 16/32, H04W 48/16

(54) **MOBILE COMMUNICATION SYSTEM AND NETWORK DEVICE**

(30) Priority: 29.02.2008 JP 2008050900
(71) Applicant: NTT DOCOMO, INC., Chiyoda-ku Tokyo 100-6150 (JP)
(72) Inventor: AOYAGI, Kenichiro, Chiyoda-ku Tokyo 100-6150 (JP)
(74) Representative: HOFFMANN EITLE
(86) International application number: PCT/JP2009/053738
(87) International publication number: WO 2009/107802

(57) **Abstract**

A mobile communication system according the embodiment is configured such that upon receipt of a radio link establishment request from a mobile station UE #Y via the home cell #a, a cell with which the mobile station is to establish a radio link is selected from the first candidate group, and upon receipt of a radio link establishment request from the mobile station UE #X via the macro cell #A, a cell with which the mobile station is to establish a radio link is selected from the second candidate group.

## Description

### TECHNICAL FIELD

The present invention relates to a mobile communication system including a first macro cell and a first home cell which use a first frequency, and also relates to a network device.

### BACKGROUND ART

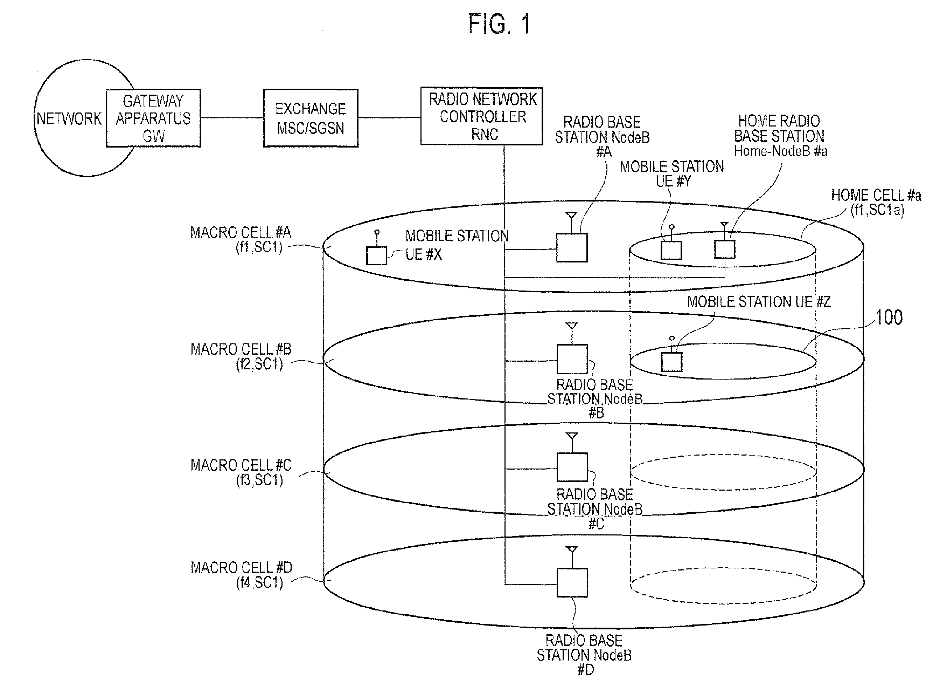

Heretofore, a mobile communication system as shown in Fig. 1 has been known in which multiple macro cells #A, #B, #C, and #D using different frequencies are set in an area where a common scrambling code SC1 is set.

In this mobile communication system, at execution of processing for incoming and outgoing calls, mobile control processing, and processing for ending a call for each mobile station UE, a radio network controller RNC selects a macro cell with which the mobile station UE is to establish a radio link. This selection is made on the basis of a usage ratio, a cell type, an access list, a type of service that can be provided, and the like of each macro cell, and thus traffic is dispersed and frequencies are used efficiently.

In an IMT2000 type mobile communication system, an area is fragmented by use of scrambling codes set for macro cells, respectively. Upon receipt of a trigger signal transmitted from each mobile station UE, a radio network controller RNC is configured to determine macro cells #A, #B, #C, and #D set with the same scrambling code, as candidates for a macro cell with which the mobile station UE is to establish a radio link.

However, upon receipt of the trigger signal transmitted from each mobile station UE, the radio network controller RNC in a conventional mobile communication system is configured to determine the candidates for the macro cell with which the mobile station UE is to establish a radio link, without identifying the location of the mobile station UE in a macro cell.

As a result, for example as shown in Fig. 1, when a home cell #a using a frequency f1 exists in the macro cell #A using the same frequency f1, a mobile station UE #Y that is not allowed to access the home cell #a may establish a radio link with the macro cell #A. In such a case, there has been a problem that a radio wave of the home cell #a may act as an interference wave, and cause deterioration in the communication quality.

### DISCLOSURE OF THE INVENTION

The present invention is made in view of the above problem, and aims to provide a mobile communication system and a network device which make it possible to avoid influence of interference by a home cell #a when the home cell #a using a frequency f1 exists in a macro cell #A using the same frequency f1, and to improve efficiency in the use of frequencies.

The first feature of the present invention relates to a mobile communication system comprising a first macro cell and a first home cell which use a first frequency. The first home cell is configured to cover a part of a coverage area of the first macro cell. A first candidate group is configured to include the first home cell, the first macro cell and at least one second macro cell using a frequency different from the first frequency. A second candidate group is configured not to include either the first home cell or the first macro cell, but to include the at least one second macro cell. Upon receipt of a radio link establishment request from a mobile station via the first home cell, a cell with which the mobile station is to establish a radio link is selected from the first candidate group, and upon receipt of a radio link establishment request from the mobile station via the first macro cell, a cell with which the mobile station is to establish a radio link is selected from the second candidate group.

The second feature of the present invention relates to a network device comprising a first macro cell and a first home cell which use a first frequency. The first home cell is configured to cover a part of a coverage area of the first macro cell. A first candidate group is configured to include the first home cell, the first macro cell and at least one second macro cell using a frequency different from the first frequency. A second candidate group is configured not to include either the first home cell or the first macro cell, but to include the at least one second macro cell. Upon receipt of a radio link establishment request from a mobile station via the first home cell, a cell with which the mobile station is to establish a radio link is selected from the first candidate group, and upon receipt of a radio link establishment request from the mobile station via the first macro cell, a cell with which the mobile station is to establish a radio link is selected from the second candidate group.

The third feature of the present invention relates to a mobile communication system comprising a first macro cell and a first home cell which use a first frequency. A first candidate group is configured to include the first home cell, the first macro cell and at least one second macro cell using a frequency different from the first frequency. A second candidate group is configured not to include either the first home cell or the first macro cell but to include the at least one second macro cell. Location information of the mobile station is measured upon receipt of a radio link establishment request from the mobile station, and a cell with which the mobile station is to establish a radio link is selected from one of the first candidate group and the second candidate group depending on the measured location information of the mobile station.

The fourth feature of the present invention relates to a network device comprising a first macro cell and a first home cell which use a first frequency. A first candidate group is configured to include the first home cell, the first macro cell and at least one second macro cell using a frequency different from the first frequency. A second candidate group is configured not to include either the first home cell or the first macro cell but to include the at least one second macro cell. Location information of the mobile station is measured upon receipt of a radio link establishment request from the mobile station, and a cell with which the mobile station is to establish a radio link is selected from one of the first candidate group and the second candidate group depending on the measured location information of the mobile station.

### BRIEF DESCRIPTION OF THE DRAWINGS

[Fig. 1] Fig. 1 is an entire configuration diagram of a mobile communication system according to a first embodiment of the present invention.
[Fig. 2] Fig. 2 is a functional block diagram of a radio network controller according to the first embodiment of the present invention.
[Fig. 3] Fig. 3 is a diagram showing an example of a subordination relationship managed by a subordination relationship manager of the radio network controller according to the first embodiment of the present invention.
[Fig. 4] Fig. 4 is a diagram showing an example of an access list managed by an access list manager of the radio network controller according to the first embodiment of the present invention.
[Fig. 5] Fig. 5 is a sequence diagram showing an operation for establishing a radio link in the mobile Communication system according to the first embodiment of the present invention.
[Fig. 6] Fig. 6 is a sequence diagram showing an operation for establishing a radio link in the mobile communication system according to the first embodiment of the present invention.
[Fig. 7] Fig. 7 is a sequence diagram showing an operation for establishing a radio link in the mobile communication system according to the first embodiment of the present invention.
[Fig. 8] Fig. 8 is a sequence diagram showing an operation for establishing a radio link in the mobile communication system according to the first embodiment of the present invention.
[Fig. 9] Fig. 9 is an entire configuration diagram of a mobile communication system according to Modified Example 1 of the present invention.
[Fig. 10] Fig. 10 is an entire configuration diagram of a mobile communication system according to Modified Example 2 of the present invention.
[Fig. 11] Fig. 11 is an entire configuration diagram of a mobile communication system according to Modified Example 3 of the present invention.
[Fig. 12] Fig. 12 is an entire configuration diagram of a mobile communication system according to Modified Example 4 of the present invention.

### BEST MODES FOR CARRYING OUT THE INVENTION

### (Configuration of Mobile Communication System according to First Embodiment of Present Invention)

With reference to Figs. 1 to 4, a description is given of a configuration of a mobile communication system according to a first embodiment of the present invention.

As shown in Fig. 1, the mobile communication system according to this embodiment includes a gateway apparatus GW connected to a network, an exchange MSC/SGSN, a radio network controller RNC, radio base stations NodeB #A to NodeB #D, a home radio base station Home-NodeB #a, and mobile stations UE #X and UE #Y.

In this embodiment, a macro cell #A managed by the radio base station NodeB #A uses a frequency f1 a macro cell #B managed by the radio base station NodeB #B uses a frequency f2, a macro cell #C managed by the radio base station NodeB #C uses a frequency f3, and a macro cell #D managed by the radio base station NodeB #D uses a frequency f4.

Meanwhile, a home cell #a (first home cell) managed by the home radio base station Home-NodeB #a uses the frequency f1 (first frequency) which is the same frequency as the macro cell #A (first macro cell) uses.

As shown in Fig. 1, the home cell #a is configured to cover a part of the coverage area of the macro cell #A.

Moreover, a common scrambling code SC1 is set for the macro cells #A to #D. Note that a scrambling code SC1a to be set for the home cell #a may be the same scrambling code as the scrambling code SC1 set for the macro cells #A to #D, or may be a different scrambling code.

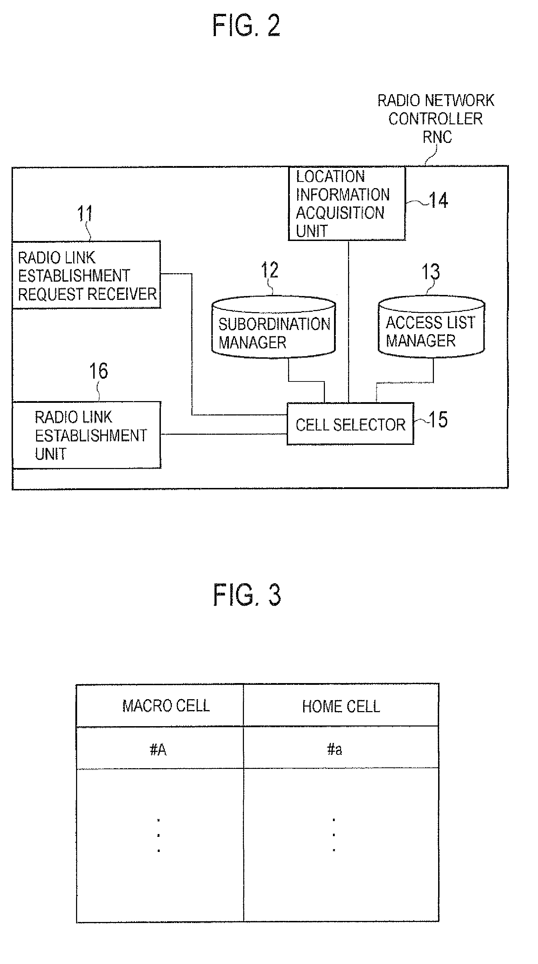

As shown in Fig. 2, the radio network controller RNC according to this embodiment functions as a network device including a radio link establishment request receiver 11, a subordination relationship manager 12, an access list manager 13, a location information acquisition unit 14, a cell selector 15 and a radio link establishment unit 16.

The radio link establishment request receiver 11 is configured to receive a radio link establishment request transmitted from the mobile station UE.

To be specific, the radio link establishment request receiver 11 is configured to receive an "RRC Connection Request message," a "Cell Update massage," a "Measurement Report message" and the like from the mobile station UE being in an IDLE state, a common channel state or the like.

As shown in Fig. 2, the subordination relationship manager 12 is configured to manage each home cell in association with a macro cell that covers at least a part of the coverage area of the home cell. Here, the subordination relationship manager 12 is configured to identify each cell (macro cell and home cell) by use of a cell ID or a scrambling code.

As shown in Fig. 3, the access list manager 13 is configured to manage a list of accessible mobile stations (access list) for each home cell. Incidentally, the access list manager 13 may be configured to manage a list of mobile stations whose access is regulated (access regulation list) for each home cell.

The location information acquisition unit 14 is configured to acquire location information on the mobile station UE.

For example, the location information acquisition unit 14 may be configured to acquire location information on the mobile station UE by use of a GPS positioning result, a measurement result of propagation delay between the radio base station NodeB and the mobile station UE, or the like.

In addition, the location information acquisition unit 14 may be configured to compute location information on the mobile station UE according to location information on the radio base station NodeB with which the mobile station UE establishes a radio link.

For example, if the mobile station UE establishes radio links with multiple radio base stations NodeB, the location information acquisition unit 14 may acquire an intermediate point among the pieces of location information on multiple radio base stations NodeB as location information on the mobile station UE.

Upon receipt of a radio link establishment request from the mobile station UE #Y via the home cell #a, the cell selector 15 is configured to select a cell from a first candidate group, with which the mobile station UE #Y is to establish a radio link.

In this case, the mobile station UE #Y is allowed access to the home cell #a, and is in an idle state in the home cell #a.

Meanwhile, upon receipt of a radio link establishment request from the mobile station UE #X via the macro cell #A, the cell selector 15 is configured to select a cell from a second candidate group, with which the mobile station UE #X is to establish a radio link.

In this case, the mobile station UE #X may be allowed access to the home cell #a, or otherwise access to the home cell #a may be regulated. In addition, in this case, the mobile station UE #X is in an idle state in the macro cell #A.

Here, the first candidate group is configured to include the home cell #a, the macro cell #A and at least one second macro cell (macro cells #B, #C and #D in the example of Fig. 1) using a frequency different from the frequency f1.

Meanwhile, the second candidate group is configured not to include either the home cell #a or the macro cell #A, but to include at least one second macro cell (macro cells #B, #C and #D in the example of Fig. 1).

Moreover, upon receipt of a radio link establishment request from the mobile station UE, the cell selector 15 is configured to select a cell from the aforementioned first or second candidate group, with which the mobile station UE is to establish a radio link. This selection is made according to location information on the mobile station UE, which is measured (acquired) by the location information acquisition unit 14.

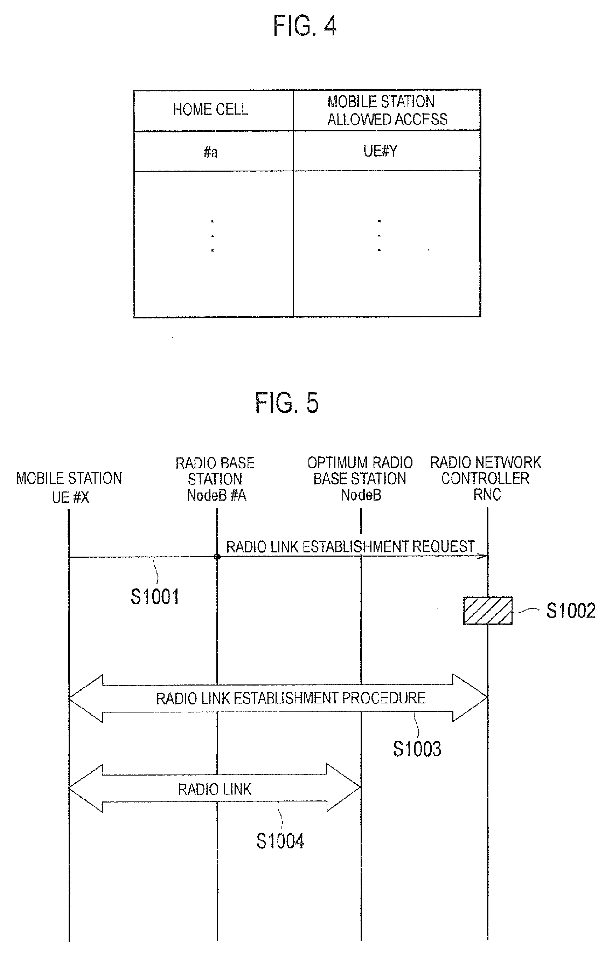

As shown in Fig. 1 for example, when receiving a radio link establishment request from the mobile station UE #Z via the macro cell #B and determining that the mobile station UE #Z is located in a coverage area of the home cell #a, the cell selector 15 is configured to refer to the access list manager 13 shown in Fig. 4 and thereby know that access by the mobile station UE #Z to the home cell #a is regulated. Then, the cell selector 15 refers to the subordination relationship manager 12 shown in Fig. 3 and selects a cell with which the mobile station UE #Z is to establish a radio link, from the second candidate group configured not to include either the home cell #a or the macro cell #A but to include the macro cells #B, #C and #D.

Meanwhile, as shown in Fig. 1 four example, when receiving a radio link establishment request from the mobile station UE #Y via the macro cell #A and determining that the mobile station UE #Y is located in a coverage area of the home cell #a, the cell selector 15 is configured to refer to the access list manager 13 shown in Fig. 4 and thereby know that the mobile station UE #Y is allowed access to the home cell #a. Then, the cell selector 15 selects a cell with which the mobile station UE #Y is to establish a radio link, from the first candidate group configured to include the home cell #a and the macro cells #A, #B, #C and #D.

Further, as shown in Fig. 1 for example, when receiving a radio link establishment request from the mobile station UE #X via the macro cell #A and determining that the mobile station UE #X is not located in a coverage area of the home cell #a, the cell selector 15 is configured to select, without referring to the access list manager 13 shown in Fig. 4 (that is, regardless of whether or not the mobile station UE #X is allowed access to the home cell #a), a cell with which the mobile station UE #X is to establish a radio link, from a third candidate group configured to include the macro cells #A, #B, #C and #D,

The radio link establishment unit 16 is configured to establish a radio link between a cell selected by the cell selector 15 and the mobile station UE.

### (Operation of Mobile Communication System according to First Embodiment of Present Invention)

With reference to Figs. 5 to 8, a description is given of an operation of the mobile communication system according to the first embodiment of the present invention.

Firstly, a description is given with reference to Fig. 5, of an operation in which the mobile station UE #X shown in Fig. establishes a radio link.

As shown in Fig. 5, in step S1001, the mobile station UE #X being in an idle state in the macro cell #A transmits a radio link establishment request to the radio network controller RNC via the macro cell #A (the radio base station NodeB #A managing the macro cell #A).

In step S1002, the radio network controller RNC receives the radio link establishment request from the mobile station UE #X via the macro cell #A (the radio base station NodeB #A managing the macro cell #A), and selects a cell with which the mobile station UE #X is to establish a radio link, from the second candidate group including the macro cells #B, #C and #D.

Alternatively, in step S1002, the radio network controller RNC may receive the radio link establishment request from the mobile station UE #X via the macro cell #A, determine that the mobile station UE #X is not located in the coverage area of the home cell #a, and select a cell with which the mobile station UE #X is to establish a radio link, from the third candidate group configured to include the macro cells #A, #B, #C and #D.

In step S1003, the radio network controller RNC carries out a radio link establishment procedure between the cell (the radio base station NodeB managing the cell) selected in step S1002 and the mobile station UE #X. In step S1004, the radio link is established between the cell (the radio base station NodeB managing the cell) selected in step S1002 and the mobile station UE #X.

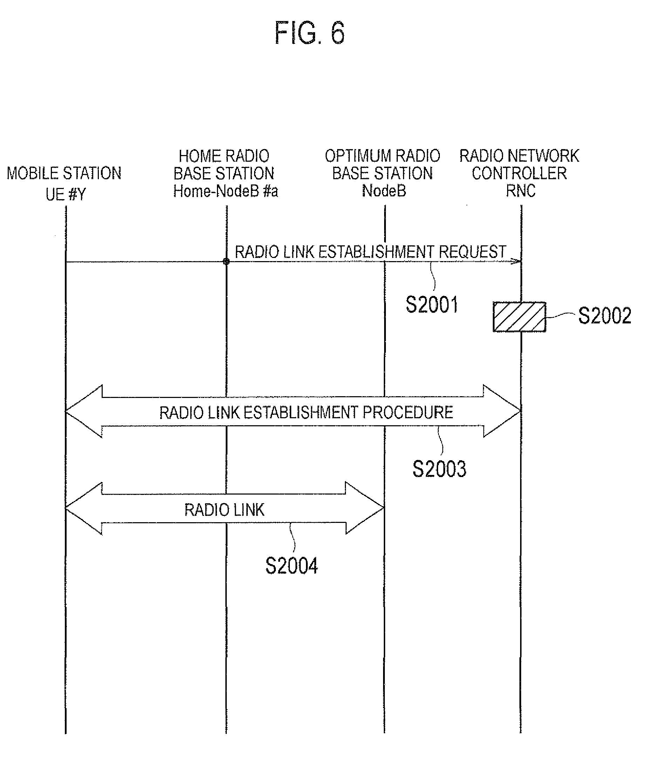

Secondly, a description is given with reference to Fig. 6, of a first operation in which the mobile station UE #Y shown in Fig. 1 establishes a radio link.

As shown in Fig. 6, in step S2001, the mobile station UE #Y being in an idle state in the home cell #a transmits a radio link establishment request to the radio network controller RNC via the home cell #a (the home radio base station Home-NodeB #a managing the home cell #a).

In step S2002, the radio network controller RNC receives the radio link establishment request from the mobile station UE #Y via the home cell #a (the home radio base station Home-NodeB #a managing the home cell #a), and selects a cell with which the mobile station UE #Y is to establish a radio link, from the first candidate group including the home cell #a and the macro cells #A, #B, #C and #D.

In step S2003, the radio network controller RNC carries out a radio link establishment procedure between the cell (the radio base station NodeB/Home-NodeB managing the cell) selected in step S2002 and the mobile station UE #Y. In step S2004, the radio link is established between the cell (the radio base station NodeB/Home-NodeB managing the cell) selected in step S2002 and the mobile station UE #Y.

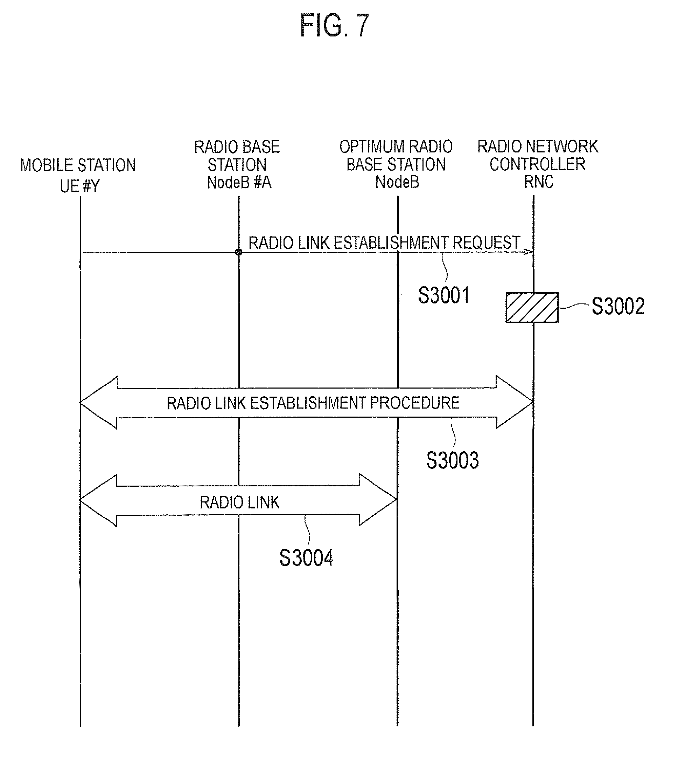

Thirdly, a description is given with reference to Fig. 7, of a second operation in which the mobile station UE #Y shown in Fig. 1 establishes a radio link.

As shown in Fig. 7, in step S3001, the mobile station UE #Y being in an idle state in the macro cell #A transmits a radio link establishment request to the radio network controller RNC via the macro cell #A (the radio base station NodeB #A managing the macro cell #A).

In step S3002, the radio network controller RNC receives the radio link establishment request from the mobile station UE #Y via the macro cell #A (the radio base station NodeB #A managing the macro cell #A), determines that the mobile station UP #Y is located in the coverage area of the home cell #a, and know that the mobile station UE #Y is allowed access to the home cell #a. Hence, the radio network controller RNC selects a cell with which the mobile station UE #Y is to establish a radio link, from the first candidate group configured to include the home cell #a and the macro cells #A, #B, #C and #D.

In step S3003, the radio network controller RNC carries out a radio link establishment procedure between the cell (the radio base station NodeB/Home-NodeB managing the cell) selected in step 53002 and the mobile station UE #Y. In step S3004, the radio link is established between the cell (the radio base station NodeB/Home-NodeB managing the cell) selected in step S3002 and the mobile station UE #Y.

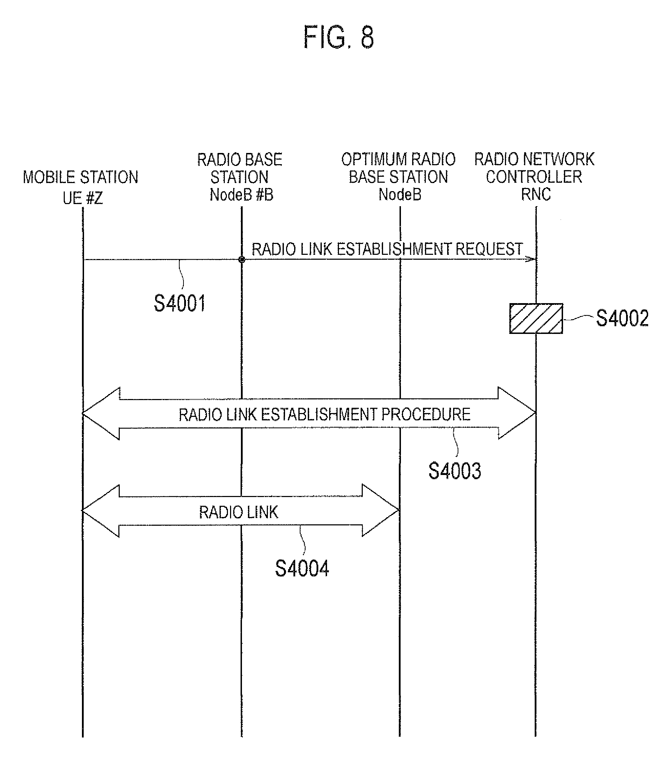

Fourthly, a description is given with reference to Fig. 8, of an operation in which the mobile station UE #Z shown in Fig. 1 establishes a radio link.

As shown in Fig. 8, in step S4001, the mobile station UE #Z being in an idle state in the macro cell #B transmits a radio link establishment request to the radio network controller RNC via the macro cell #B (the radio base station NodeB #B managing the macro cell #B).

In step S4002, the radio network controller RNC receives the radio link establishment request from the mobile station UE #Z via the macro cell #B (the radio base station Nodes #B managing the macro cell #B), determines that the mobile station UE #Z is located in the coverage area of the home cell #a, and know that access by the mobile station UE #Z to the home cell #a is regulated. Hence, the radio network controller RNC selects a cell with which the mobile station UE #Z is to establish a radio link, from the second candidate group configured to include the macro cells #B, #C and #D.

In step S4003, the radio network controller RNC carries out a radio link establishment procedure between the cell (the radio base station NodeB managing the cell) selected in step S4002 and the mobile station UE #Z. In step S4004, the radio link is established between the cell (the radio base station NodeB managing the cell) selected in step S4002 and the mobile station UE #Z.

### (Advantageous Effect of Mobile Communication System according to First Embodiment of Present Invention)

According to the mobile communication system of the first embodiment of the present invention, even when the home cell #a using the same frequency f1 as the macro cell #A is installed, the mobile stations UE #X and #Z that are not allowed access to the home cell #a can efficiently use frequencies outdoors or the like where the communication quality of the mobile stations UE is not influenced by an interference wave from the home cell #a.

According to the mobile communication system of the first embodiment of the present invention, even when a user of the mobile station UE #X or #Z whose access to the home cell #a is regulated visits a coverage area (such as a home) of the home cell #a, the user can communicate by selecting a frequency that is not influenced by an interference wave from the home cell #a in this area.

### (Modified Example 1)

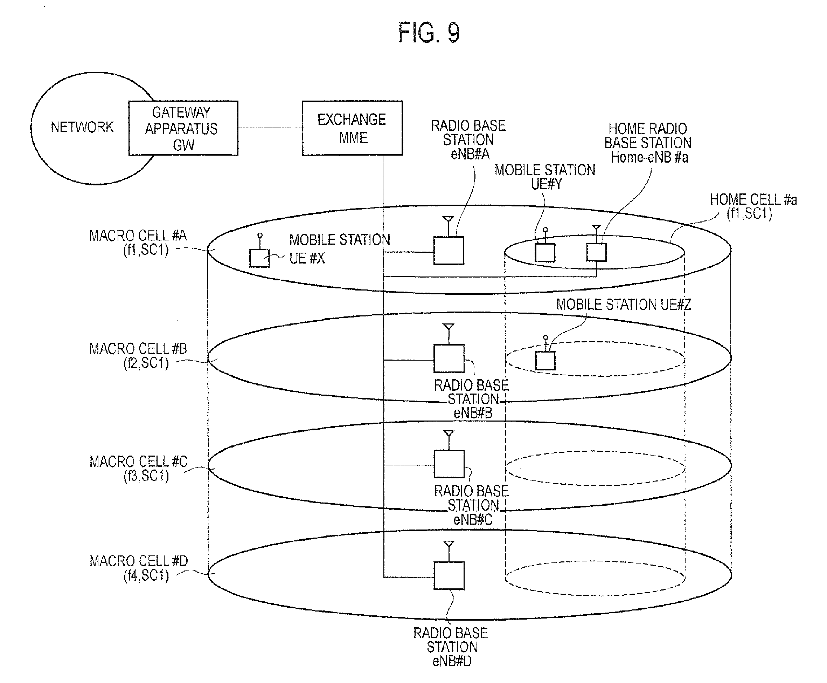

Although the above embodiment has been described by taking a W-CDMA type mobile communication system as an example, the present invention is not limited to this mobile communication system, and is also applicable to an LTE (Long Term Evolution) type mobile communication system, for example as shown in Fig. 9.

In this case, the above-mentioned function of the radio base station NodeB and that of the radio network controller RNC are installed in a radio base station eNB or an exchange MME. Here, in this modified example, the exchange MME is configured to serve as the above network device.

Additionally, a subordination relationship manager 12 of the exchange MME is configured to identify each cell (macro cell and home cell) by use of a "Tracking Area ID."

To be specific, as shown in Fig. 9, in the mobile communication system according to Modified Example 1, radio base stations NodeB #A to NodeB #D and a home radio base station Home-NodeB #a are accommodated in the exchange MME.

For example, upon receipt of a radio link establishment request from a mobile station UE #Y via a home cell #a, a cell selector 15 of the exchange MME may be configured to select a cell from a first candidate group, with which the mobile station UE #Y is to establish a radio link.

Moreover, upon receipt of a radio link establishment request from a mobile station UE #X via a macro cell #A, the cell selector 15 of the exchange MME may be configured to select a cell from a second candidate group, with which the mobile station UE #X is to establish a radio link.

Moreover, upon receipt of a radio link establishment request from the mobile station UE #Y via the home cell #a, the cell selector 15 of the exchange MME may be configured to select a cell from the aforementioned first or second candidate group, with which the mobile station UE #Y is to establish a radio link. This selection is made according to location information on the mobile station UE #Y, which is measured (acquired) by a location information acquisition unit 14 of the exchange MME.

Moreover, upon receipt of a radio link establishment request from the mobile station UE #X via the macro cell #A, the cell selector 15 of the exchange MME may be configured to select a cell from the aforementioned first or second candidate group, with which the mobile station UE #Y is to establish a radio link. This selection is made according to location information on the mobile station UE #X, which is measured (acquired) by a location information acquisition unit 14 of the exchange MME.

### (Modified Example 2)

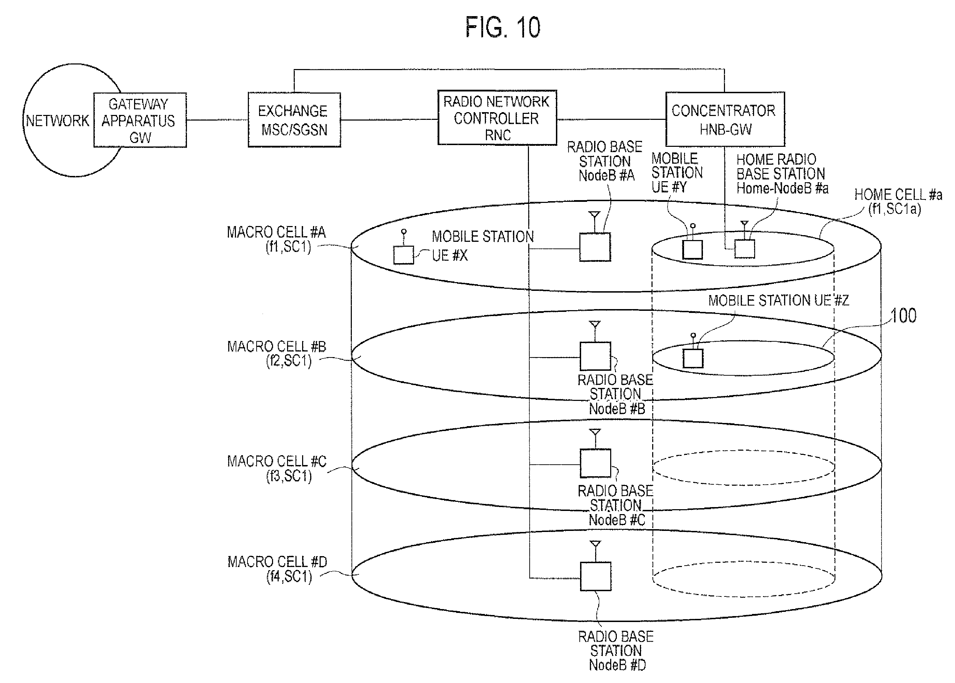

With reference to Fig. 10, a description is given below of a mobile communication system according to Modified Example 2 of the present invention by focusing on differences from the above mobile communication system according to the first embodiment.

As shown in Fig. 10, in the mobile communication system according to Modified Example 2, radio base stations NodeB #A to NodeB #D are accommodated in a radio network controller RNC, and a home radio base station Home-NodeB #a is accommodated in a concentrator HNB-GW.

In this Modified Example 2, the system is configured so that at least one of the radio network controller RNC and the concentrator HNB-GW serves as the network device described above.

For example, upon receipt of a radio link establishment request from a mobile station UE #Y via a home cell #a, a cell selector 15 of the concentrator HNB-GW may be configured to select a cell from a first candidate group, with which the mobile station UE #Y is to establish a radio link.

Moreover, upon receipt of a radio link establishment request from a mobile station UE #X via a macro cell #A, a cell selector 15 of the radio network controller RNC may be configured to select a cell from a second candidate group, with which the mobile station UE #X is to establish a radio link.

Moreover, upon receipt of a radio link establishment request from the mobile station UE #Y via the home cell #a, the cell selector 15 of the concentrator HNB-GW may be configured to select a cell from the aforementioned first or second candidate group, with which the mobile station UE #Y is to establish a radio link. This selection is made according to location information on the mobile station UE #Y, which is measured (acquired) by a location information acquisition unit 4 of the concentrator HNB-GW.

Moreover, upon receipt of a radio link establishment request from the mobile station UE #X via the macro cell #A, the cell selector 15 of the radio network controller RNC may be configured to select a cell from the aforementioned first or second candidate group, with which the mobile station UE #Y is to establish a radio link. This selection is made according to location information on the mobile station UE #X, which is measured (acquired) by a location information acquisition unit 14 of the radio network controller RNC.

Otherwise, upon receipt of a radio link establishment request from a mobile station UE via the home cell #a or the macro cell #A, the cell selector 15 of the concentrator HNB-GW or the cell selector 15 of the radio network controller RNC may be configured to select a cell from the first candidate group or the second candidate group, with which the mobile station UE is to establish a radio link.

In this case, at least one of an exchange MSC/SGSN, the radio network controller RNC and the home radio base station Home-NodeB #a may be configured to notify the concentrator HNB-GW of various information on cells controlled thereunder through a predetermined interface.

Otherwise, at least one of the exchange MSC/SGSN, the concentrator HNB-GW and the radio base stations NodeB #A to NodeB #D may be configured to notify the radio network controller RNC of various information on cells controlled thereunder through a predetermined interface.

### (Modified Example 3)

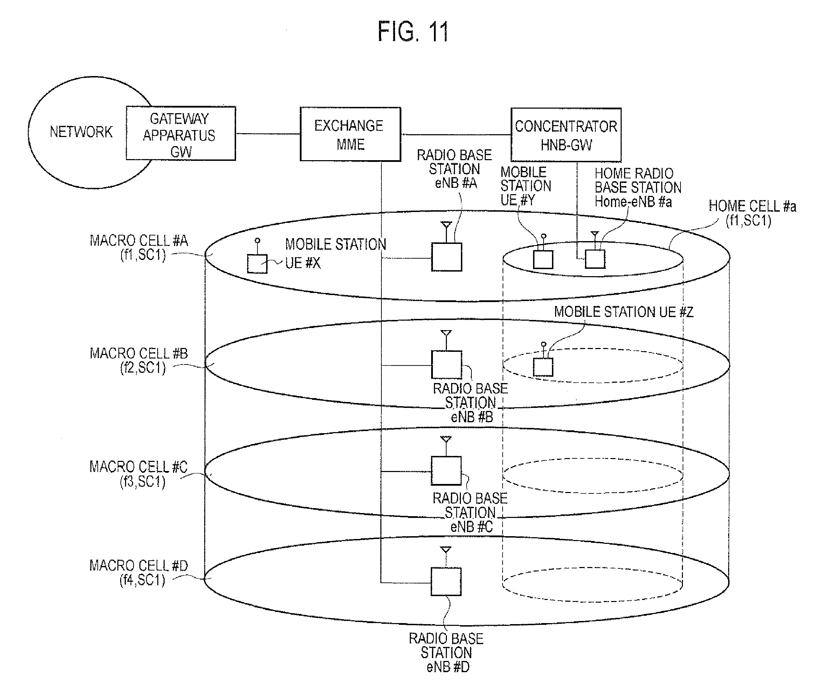

With reference to Fig. 11, a description is given below of a mobile communication system according to Modified Example 3 of the present invention by focusing on differences from the above mobile communication system according to the first embodiment.

As shown in Fig. 11, the mobile communication system according to Modified Example 3 is an LTE type mobile communication system in which radio base stations NodeB #A to NodeB #D are accommodated in an exchange MME, and a home radio base station Home-NodeB #a is accommodated in a concentrator HNB-GW.

In this Modified Example 3, the system is configured so that both the exchange MME and the concentrator HNB-GW serve as the network device described above.

For example, upon receipt of a radio link establishment request from a mobile station UE #Y via a home cell #a, a cell selector 15 of the concentrator HNB-GW may be configured to select a cell from a first candidate group, with which the mobile station UE #Y is to establish a radio link.

Moreover, upon receipt of a radio link establishment request from a mobile station UE #X via a macro cell #A, a cell selector 15 of the exchange MME may be configured to select a cell from a second candidate group, with which the mobile station UE #X is to establish a radio link.

Moreover, upon receipt of a radio link establishment request from the mobile station UE #Y via the home cell #a, the cell selector 15 of the concentrator HNB-GW may be configured to select a cell from the aforementioned first or second candidate group, with which the mobile station UE #Y is to establish a radio link. This selection is made according to location information on the mobile station UE #Y, which is measured (acquired) by a location information acquisition unit 14 of the concentrator HNB-GW.

Moreover, upon receipt of a radio link establishment request from the mobile station UE #X via the macro cell #A, the cell selector 15 of the exchange MME may be configured to select a cell from the aforementioned first or second candidate group, with which the mobile station UE #Y is to establish a radio link. This selection is made according to location information on the mobile station UE #X, which is measured (acquired) by a location information acquisition unit 14 of the exchange MME.

Otherwise, upon receipt of a radio link establishment request from a mobile station UE via the home cell #a or the macro cell #A, the cell selector 15 of the concentrator HNB-GW or the cell selector 15 of the exchange MME may be configured to select a cell from the first candidate group or the second candidate group, with which the mobile station UE is to establish a radio link.

In this case, at least one of the exchange MME and the home radio base station Home-NodeB #a may be configured to notify the concentrator HNB-GW of various information on cells controlled thereunder through a predetermined interface.

Otherwise, at least one of the concentrator HNB-GW and the radio base stations NodeB #A to NodeB #D may be configured to notify the exchange MME of various information on cells controlled thereunder through a predetermined interface.

### (Modified Example 4)

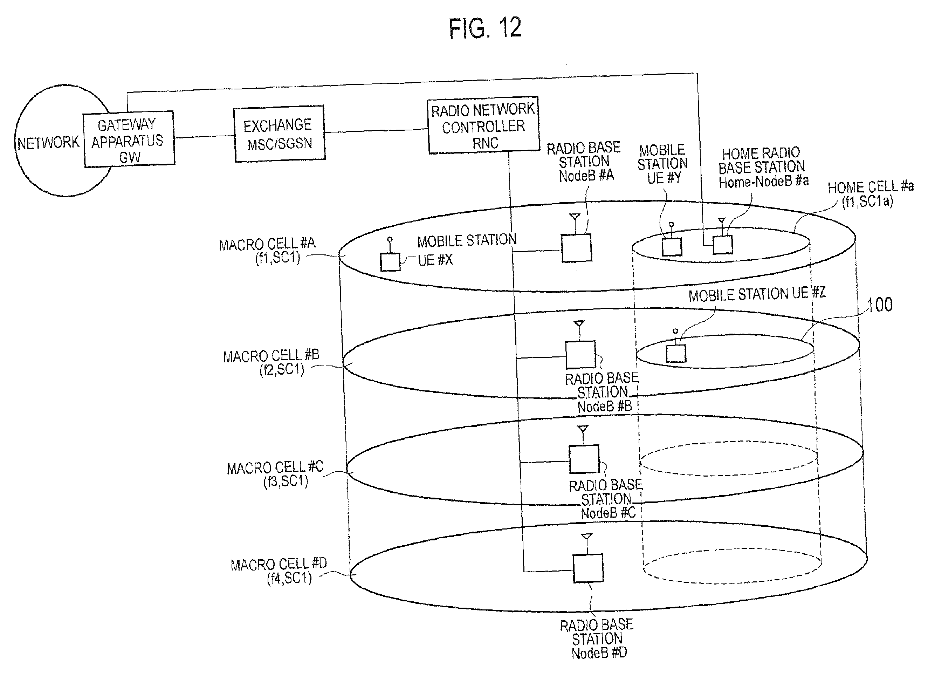

With reference to Fig. 12, a description is given below of a mobile communication system according to Modified Example 4 of the present invention by focusing on differences from the above mobile communication system according to the first embodiment.

As shown in Fig. 12, in the mobile communication system according to Modified Example 4, radio base stations NodeB #A to NodeB #D are accommodated in a radio network controller RNC, and a home radio base station Home-NodeB #a is accommodated in a gateway apparatus GW.

In this Modified Example 4, the system is configured so that both the radio network controller RNC and the home radio base station Home-NodeB #a serves as the network device described above.

For example, upon receipt of a radio link establishment request from a mobile station UE #Y via a home cell #a, a cell selector 15 of the home radio base station Home-NodeB #a may be configured to select a cell from a first candidate group, with which the mobile station UE #Y is to establish a radio link.

Otherwise, upon receipt of a radio link establishment request from the mobile station UE #Y via the home cell #a, the cell selector 15 of the home radio base station Home-NodeB #a may be configured to select a cell from the aforementioned first or second candidate group, with which the mobile station UE #Y is to establish a radio link. This selection is made according to location information on the mobile station UE #Y, which is measured (acquired) by a location information acquisition unit 14 of the home radio base station Home-NodeB #a.

Here, the home radio base station Home-NodeB #a may previously store various information on cells other than those controlled thereunder, by plug and play or the like.

Here, the operation of the above-mentioned mobile station UE, radio base stations NodeB or eNB, home radio base station Home-NodeB, exchange MME or MSC/SGSN, radio network controller RNC, concentrator HNB-GW, and gateway apparatus GW_may be implemented by means of hardware, a software module executed by a processor, or a combination of both.

The software module may be provided in a storage medium in any format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Moreover, the storage medium may be integrated into the processor. Additionally, the storage medium and the processor may be provided in an ASIC. The ASIC may be provided in the mobile station UE, the radio base stations NodeB or eNB, the home radio base station Home-NodeB, the exchange MME or MSC/SGSN, the radio network controller RNC, the concentrator HNB-GW, and the gateway apparatus GW. Alternatively, the storage medium and the processor may be provided in the mobile station UE, the radio base stations NodeB or eNB, the home radio base station Home-NodeB, the exchange MME or MSC/SGSN, the radio network controller RNC, the concentrator HNB-GW, and the gateway apparatus GW as a discrete component.

Hereinabove, the present invention has been described in detail using the above embodiments; however, it is apparent to those skilled in the art that the present invention is not limited to the embodiments described herein. Modifications and variations of the present invention can be made without departing from the spirit and scope of the present invention defined by the description of the scope of claims. Thus, what is described herein is for illustrative purpose, and has no intention whatsoever to limit the present invention.

### Industrial Applicability

As described above, the present invention provides a mobile communication system and a network device which make it possible to avoid influence of interference by the home cell #a when the home cell a using the frequency f1 exists in the macro cell #A using the same frequency f1 and to improve efficiency in the use of frequencies.

## Claims

1. A mobile communication system comprising a first macro cell and a first home cell which use a first frequency, wherein:
the first home cell is configured to cover a part of a coverage area of the first macro cell;
a first candidate group is configured to include the first home cell, the first macro cell and at least one second macro cell using a frequency different from the first frequency;
a second candidate group is configured not to include either the first home cell or the first macro cell, but to include the at least one second macro cell;
upon receipt of a radio link establishment request from a mobile station via the first home cell, a cell with which the mobile station is to establish a radio link is selected from the first candidate group; and
upon receipt of a radio link establishment request from the mobile station via the first macro cell, a cell with which the mobile station is to establish a radio link is selected from the second candidate group.

2. A network device comprising a first macro cell and a first home cell which use a first frequency, wherein:
the first home cell is configured to cover a part of a coverage area of the first macro cell;
a first candidate group is configured to include the first home cell, the first macro cell and at least one second macro cell using a frequency different from the first frequency;
a second candidate group is configured not to include either the first home cell or the first macro cell, but to include the at least one second macro cell;
upon receipt of a radio link establishment request from a mobile station via the first home cell, a cell with which the mobile station is to establish a radio link is selected from the first candidate group; and
upon receipt of a radio link establishment request from the mobile station via the first macro cell, a cell with which the mobile station is to establish a radio link is selected from the second candidate group.

3. A mobile communication system comprising a first macro cell and a first home cell which use a first frequency, wherein:
a first candidate group is configured to include the first home cell, the first macro cell and at least one second macro cell using a frequency different from the first frequency;
a second candidate group is configured not to include either the first home cell or the first macro cell but to include the at least one second macro cell;
location information of the mobile station is measured upon receipt of a radio link establishment request from the mobile station; and
a cell with which the mobile station is to establish a radio link is selected from one of the first candidate group and the second candidate group depending on the measured location information of the mobile station.

4. A network device comprising a first macro cell and a first home cell which use a first frequency, wherein:
a first candidate group is configured to include the first home cell, the first macro cell and at least one second macro cell using a frequency different from the first frequency;
a second candidate group is configured not to include either the first home cell or the first macro cell but to include the at least one second macro cell;
location information of the mobile station is measured upon receipt of a radio link establishment request from the mobile station; and
a cell with which the mobile station is to establish a radio link is selected from one of the first candidate group and the second candidate group depending on the measured location information of the mobile station.
